# EUROPEAN PATENT APPLICATION

(11) **EP 2 503 731 A1**
(43) Date of publication of application: **26.09.2012**
(21) Application number: 11290143.4
(22) Date of filing: 22.03.2011
(51) Int. Cl.: H04L 9/32, H04L 29/06

(54) **Credentials based method to authenticate a user equipment in a mobile network**

(71) Applicant: Alcatel Lucent, 75007 Paris (FR)
(72) Inventor: Chakri, Al Mahdi , Alcatel Lucent Bell Labs France, 91620 Nozay (FR); Conte, Alberto , Alcatel Lucent Bell Labs France, 91620 Nozay (FR); Thomas, Laurent , Alcatel Lucent Bell Labs France, 91620 Nozay (FR)
(74) Representative: Croonenbroek, Thomas Jakob

(57) **Abstract**

The invention relates to a method to authenticate a user equipment in a wireless network using a smart card (11) comprising at least one credential token (13, 15), wherein the smart card (11) is accredited by a primary authentication authority (3) and installed in a user equipment, comprising the following steps :
- transferring a first credential token (15, 17) of the smart card (11) installed in the user equipment to a selected first mobile network operator (9, 13),
- using the first credential token (15, 17) to authenticate the user equipment on the mobile network of the selected mobile network operator (9, 13).

The invention also relates to the associated smart card.

## Description

### BACKGROUND OF THE INVENTION

The present invention relates to the field of telecommunications and more specifically of authentication of a user equipment in a mobile network such as a wireless radio access network.

In the current mobile networks, such as WCDMA/3G or LTE, the authentication of a user equipment is performed using smart cards known as Universal Integrated Circuit Card (UICC), often a Java card that is inserted in the user equipment. As used herein, the term user equipment refers to a user/terminal pair.

The Universal Integrated Circuit Card runs a specific application known as Universal Subscriber Identity Module (USIM) to perform user equipment authentication. The USIM comprises secret, securely stored, subscriber information such as codes like Personal Identification Number (PIN) and Personal Unlocking Key (PUK), ciphering keys and information and subscription related information.

In particular, the USIM stores an identifier known as International Mobile Subscriber Identity IMSI, a 15 digit number uniquely identifying the user equipment, and an associated secret key.

This framework is known to be very rigid through the fact that usual UICC modules are mobile network operator specific and exclusive. Consequently, to switch operator, the user has to change the card, replacing it with a new one exclusive to the new operator.

In particular, it is practically impossible for manufacturers having released a fleet of user equipments using the service provided by an operator, such as navigation systems using for example GPS, to switch network operator. This would imply replacing the UICC in all sold and shipped equipments, leading to potentially immense costs and user disturbance.

### SUMMARY OF THE INVENTION

In order to overcome at least partially the aforementioned drawbacks, the invention has for object a method to authenticate a user equipment in a wireless network using a smart card comprising at least one credential token, wherein the smart card is accredited by a primary authentication authority, comprising the following steps :
- transferring a first credential token of the smart card installed in the user equipment to a selected first mobile network operator,
- using the first credential token to authenticate the user equipment on the mobile network of the selected first mobile network operator.

By allowing to choose the mobile network operator after the implementation of the smart card, a larger freedom in said choice is granted.

The method can also have one or more of the following characteristics, taken separately or in combination.

The smart card comprises a plurality of credential tokens, and the method further comprises the steps :
- transferring a second credential token of the smart card installed in the user equipment to a second mobile network operator,
- using the second credential token to authenticate the user equipment on the mobile network of the second mobile network operator.

The smart card comprises a UICC module, and the credential token comprises a USIM credential containing a secret key and an IMSI.

The mobile network operator selection is performed by a manufacturer of the user equipment.

The mobile network operator selection is performed by an end user of the user equipment.

The end user selects the mobile network operator and configures network access parameters on an account on a manufacturer's website.

The network access parameters comprise at least one of the following elements :
- service volume and/or quality,
- payment mode,
- roaming preferences,
- contract duration.

The new mobile network operator selection is performed by the user equipment manufacturer.

The new mobile network operator selection is performed by the end user.

The new mobile network operator selection is performed by the primary authentication authority.

The user equipment is one of the following : a mobile phone, a laptop, an electronic pad, a digital camera, a navigation system, a base-station, a television, a printer.

Another object of the invention is the associated smart card configured to be installed in a user equipment to enable the user equipment to be authenticated on a mobile network, wherein it comprises at least one credential token known to a primary authentication authority and destined to be communicated to an operator of a mobile network to which the user equipment will be bound.

The smart card can also have one or more of the following characteristics, taken separately or in combination.

It comprises a plurality of credential tokens.

The at least one credential token comprises a USIM credential containing a secret key and an IMSI.

The UICC module comprises a SIM chip.

Further characteristics of the invention will appear at the reading of the following description, describing by way of example different embodiments with reference to the accompanying drawings, in which :
- Fig. 1 represents schematically the steps of one embodiment of the method according to the invention,
- Fig. 2 represents schematically the steps of a network operator swap in a second embodiment of the method.

In all figures the same references relate to the same elements.

### DETAILED DESCRIPTION OF THE INVENTION

The invention relates to a method to authenticate a user equipment in a mobile network, for example WCDMA, 3G or LTE, using in particular a smart card such as a UICC.

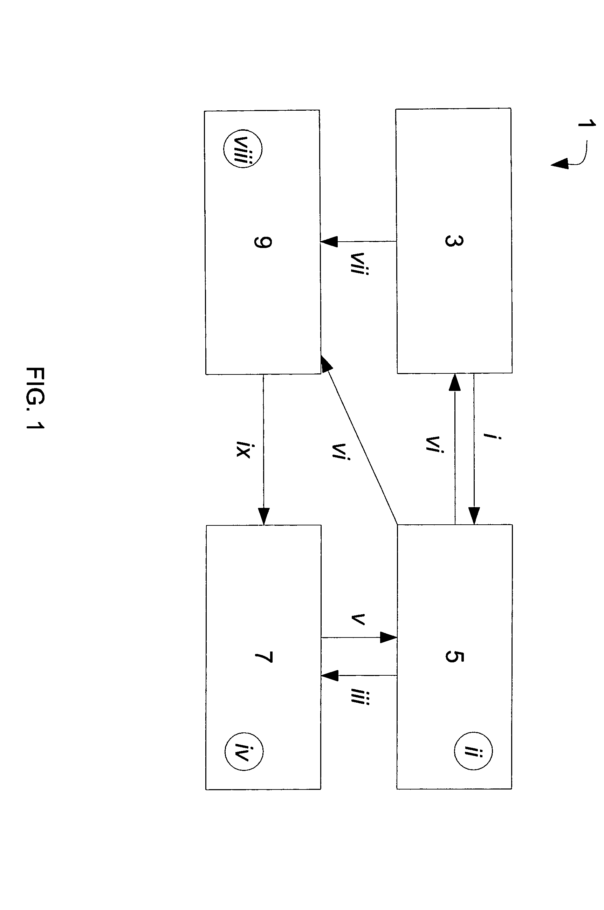

Figure 1 depicts schematically the different entities and their interactions during an implementation and authentication 1 of a smart card using one particular embodiment of the method according to the invention. The entities are represented as blocks : a primary authentication authority 3, a manufacturer 5, the user 7 and the mobile network operator 9. The steps of the method corresponding to interactions between the entities 3 to 9 are represented with arrows, the steps performed internally by one entity are represented by circles. The steps are numbered i to ix.

The first step i is the selling or shipping of smart cards from the primary authentication authority 3 to the user equipment manufacturer 5. The smart cards are here UICC modules. Notably, the smart cards are at this state "blank", meaning that they are not bound to any mobile network operator. The credential tokens, here USIM tokens comprising respectively one IMSI and key K, and the secret data stored on the smart cards are in particular only known to the primary authentication authority 3 that accredits and potentially distributes the smart cards.

In step *ii* the manufacturer 5 implements the "blank" smart cards in the user equipment. Said user equipment is then purchased in step *iii* by the end user 7 with the implemented smart card. In this particular embodiment, the user chooses in step iv the mobile network operator 9. In alternative embodiments, the choice of the operator can be performed either by the manufacturer 5 or by the primary authentication authority 3. The user equipment can be a mobile phone, a laptop, an electronic pad, a digital camera, a navigation system, a base-station, a television, a printer, or any other electronic equipment compliant with a network based service.

At first activation, or on later request by the user 7, an activation request is sent to the manufacturer 5 in step v. The activation request can be sent for example via internet. In this embodiment, the user 7 subscribes to the online service after the purchase of the user equipment by creating an account on the manufacturer's website. In this account, the user can select the mobile network operator 9, along with network access and payment parameters. For example the user 7 can choose pre-paid or post-paid service, service volume and/or quality (with premium or discount offers), his roaming preferences, and contract duration and renewing parameters.

The manufacturer 5 forwards in step vi the activation request to both primary authentication authority 3 and mobile network operator 9, who then proceed to the authentication. In response to said request, the primary authentication authority 3 sends one credential token in form of a USIM IMSI/key association to the mobile network operator 9 in step *vii.* The mobile network operator 9 configures a network account for the user equipment in step *viii* using the parameters chosen by the user 7 in steps iv-v. In particular, the operator 9 makes the IMSI routable on his network.

The last step ix is the activation of the network service for the user equipment, that can be done by sending an activation message to the user 7, eventually via the manufacturer's website. The message may for example contain an invitation to switch on the user equipment within a certain time window to set up the connection.

The fact that the UICC remains "blank", as depending only from the primary authentication authority 3, further in the product lifeline allows a greater freedom regarding choice of mobile network operator 9. In particular, the choice of the operator 9 can be left to the end user 7, adding in value to the user equipment. Alternatively, the manufacturer 7 can choose the mobile network operator 9, according to the best offer.

Moreover, if more than one credential token is stored on the smart card, the mobile network provider 9 can be changed in already deployed user equipments, even for a fleet of equipments.

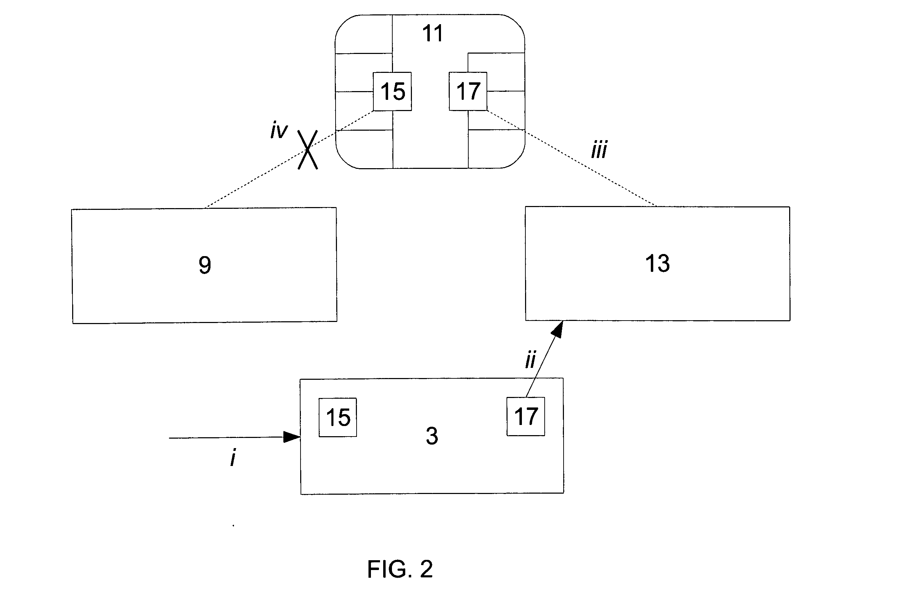

Figure 2 shows the steps of a mobile network operator swap. In figure 2 are represented the different entities that interact during the operator swap : the primary authentication authority 3, the initial mobile network operator 9, the user equipment, symbolically shown as smart card 11 in form of a SIM chip, and the second mobile network operator 13.

The first step i is the reception of a mobile network operator swap request at the primary authentication authority 3. This request can be emitted by the user, the manufacturer or the primary authentication authority 3 itself.

The primary authentication authority 3 and the smart card 11 share the knowledge of several credential tokens, in this particular case two tokens, a first one 15, and a second one 17 are represented.

The first token 15 has been communicated to the first mobile network operator 9, for example during the process of figure 1. The second token 17 is, at the beginning of process of figure 2, still known only to the smart card 11 and the primary authentication authority 3.

In step *ii,* the primary authentication authority 3 communicates the second token 17 to the second mobile network operator 13. The second mobile network operator then uses said second token 17 to bind with the user equipment in which smart card 11 is implemented during step *iii.*

Final step iv is the interruption of the bond between the smart card 11 and the first operator 9 that was using the first token 15. The user equipment can then update all network access options at first time accessing the network run by the second mobile network operator 13.

By proposing "blank" authentication smart cards, depending only of a non mobile network operator 9, 13 bound primary authentication authority 3, the invention allows freedom of operator 9, 13 choice, either for the manufacturer 5 or the end user 7. Even in the complicate and yet common case of an already deployed fleet of user equipments using a network based service, such as, for example, a series of GPS navigation devices, the manufacturer still has the possibility to change the operator 9, 13, as shown in figure 2.

By allowing the choice of the best mobile network operator 9, 13, the invention may lead to a price reduction for network based service compliant user equipments.

## Claims

1. Method to authenticate a user equipment in a wireless network using a smart card (11) comprising at least one credential token (13, 15), wherein the smart card (11) is accredited by a primary authentication authority (3) and installed in a user equipment, comprising the following steps :
- transferring a first credential token (15, 17) of the smart card (11) installed in the user equipment to a selected first mobile network operator (9, 13),
- using the first credential token (15, 17) to authenticate the user equipment on the mobile network of the selected mobile network operator (9, 13).

2. Method according to claim 1, wherein the smart card (11) comprises a plurality of credential tokens (15, 17), further comprising the steps :
- transferring a second credential token (15, 17) of the smart card (11) installed in the user equipment to a second mobile network operator (9, 13),
- using the second credential token (15, 17) to authenticate the user equipment on the mobile network of the second mobile network operator (9, 13).

3. Method according to claim 1 or 2, wherein the smart card (11) comprises a UICC module, and the credential token (15, 17) comprises a USIM credential containing a secret key and an IMSI.

4. Method according to claim 1, 2 or 3, wherein the mobile network operator (9, 13) selection is performed by a manufacturer (5) of the user equipment.

5. Method according to claim 1, 2 or 3, wherein the mobile network operator (9, 13) selection is performed by an end user (7) of the user equipment.

6. Method according to claim 5, wherein the end user (7) selects the mobile network operator (9, 13) and configures network access parameters on an account on a manufacturer's website.

7. Method according to claim 6, wherein the network access parameters comprise at least one of the following elements :
- service volume and/or quality,
- payment mode,
- roaming preferences,
- contract duration.

8. Method according to any of claims 2 to 7, wherein the new mobile network operator (9, 13) selection is performed by the user equipment manufacturer (5).

9. Method according to any of claims 2 to 7, wherein the new mobile network operator (9, 13) selection is performed by the end user (7).

10. Method according to any of claims 2 to 7, wherein the new mobile network operator (9, 13) selection is performed by the primary authentication authority (3).

11. Method according to any of the precedent claims, wherein the user equipment is one of the following : a mobile phone, a laptop, an electronic pad, a digital camera, a navigation system, a base-station, a television, a printer.

12. Smart card configured to be installed in a user equipment to enable the user equipment to be authenticated on a mobile network, wherein it comprises at least one credential token (15, 17) known to a primary authentication authority (3) and destined to be communicated to an operator (9, 13) of a mobile network to which the user equipment will be bound.

13. Smart card according to claim 12, further comprising a plurality of credential tokens (15, 17).

14. Smart card according to claim 12 or 13, further comprising a UICC module, and wherein the at least one credential token (15, 17) comprises a USIM credential containing a secret key and an IMSI.

15. Smart card according to claim 14, wherein the UICC module comprises a SIM chip (11).
